# DEMANDE DE BREVET EUROPEEN

(11) **EP 3 691 120 A1**
(43) Date de publication de la demande: **05.08.2020**
(21) Numéro de dépôt: 19181373.2
(22) Date de dépôt: 19.06.2019
(51) Int. Cl.: H02S 30/10

(54) **CELLULE SOLAIRE TRIDIMENSIONNELLE ET MODULE SOLAIRE PHOTOVOLTAIQUE**

(30) Priorité: 31.01.2019 EP 19154923
(71) Demandeur: Gauthier, Sylvain, 06310 Beaulieu (FR); Gauthier ep. Boisfer, Hannah, 92150 Suresnes (FR); Gras, Philippe, 30100 Ales (FR); Seret, Pascal, 98000 Monaco (MC); Surleraux, Christophe, 6927 Tellin (BE); Van Mosnenck, Daniel, 6870 Hatrival (BE)
(72) Inventeur: VAN MOSNENCK, Daniel, 6870 HATRIVAL (BE)
(74) Mandataire: Oudin, Stéphane

(57) **Abrégé**

La présente invention concerne une cellule solaire tridimensionnelle (1) caractérisée en ce qu'elle comporte au moins:
-une paroi photovoltaïque (2) constituée d'au moins une unité photovoltaïque (3) en forme de tronc de solide agencée de sorte à former le mur de la cellule solaire (1), ladite unité (3) étant constituée de deux bases normalement parallèles, une base supérieure B1 et une base inférieure B2 entre lesquelles s'étend une partie de solide pleine ou creuse de hauteur h dont les faces sont polygonales et/ou rondes et/ou hybrides, chaque unité (3) comportant, au moins sur sa surface interne (4), un revêtement photovoltaïque (4'),
-un noyau d'interaction (5) permettant aux ondes lumineuses d'entrer en contact avec le revêtement photovoltaïque (4').

## Description

### DOMAINE TECHNIQUE

La présente invention concerne de manière générale le domaine des énergies et plus particulièrement le domaine de l'énergie solaire photovoltaïque. Elle vise plus précisément une cellule solaire tridimensionnelle pour panneau ou module solaire photovoltaïque.

### TECHNIQUE ANTERIEURE

Dans le domaine de l'énergie solaire photovoltaïque, il est connu d'utiliser, de manière générale, des panneaux ou modules solaires en deux dimensions constitués par la superposition de plusieurs couches. Généralement, ces couches sont de haut en bas :
- un revêtement antireflet pour limiter la réflexion des rayons solaires sur les couches semi-conductrices sous-jacentes ;
- une couche de verre protectrice pour protéger la structure ;
- une grille conductrice;
- une couche de semi-conducteur dopé N ou P;
- une couche de semi-conducteur dopé P ou N;
- une couche de base.

L'inconvénient majeur de ce type de panneaux réside dans la faible quantité d'énergie produite par m². En effet, avec un panneau en 2D la quantité d'énergie produite par m² n'est optimisée.

Par ailleurs, la solution classique nécessite d'orienter le panneau de façon optimale par rapport au rayonnement solaire.

De plus, ce type de système en 2D n'a pas une production d'énergie homogène au cours de la journée. En effet, cette production suit une loi gaussienne, maximale lorsque le soleil est à son point de culmination, et plus faible le reste de la journée.

Enfin, les couches semi-conductrices présentent une très forte réflectivité, cette réflectivité est un paramètre limitant de la production d'énergie. Pour contourner ce phénomène, des revêtements antireflets sont déposés à la surface des panneaux, mais ceci engendre des coûts.

### PRESENTATION DE L'INVENTION

La présente invention a donc pour but de pallier les inconvénients précédemment cités en proposant une cellule solaire tridimensionnelle permettant de produire plus d'énergie par unité de surface qu'un module solaire classique.

Conformément à l'invention, il est donc proposé une cellule solaire tridimensionnelle caractérisée en ce qu'elle comporte au moins:
- une paroi photovoltaïque constituée d'au moins une unité photovoltaïque en forme de tronc de solide agencée de sorte à former le mur de la cellule solaire, ladite unité étant constituée de deux bases normalement parallèles, une base supérieure B1 et une base inférieure B2 entre lesquelles s'étend une partie de solide pleine ou creuse de hauteur h dont les faces sont polygonales et/ou rondes et/ou hybrides, chaque unité comportant, au moins sur sa surface interne, un revêtement photovoltaïque,
- un noyau d'interaction permettant aux ondes lumineuses d'entrer en contact avec le revêtement photovoltaïque.
Le terme « solide » fait référence au « solide géométrique » qui se définit comme étant l'ensemble des points situés à l'intérieur d'une partie fermée de l'espace.
Le terme « tronc solide » désigne, quant à lui, la partie d'un solide situé entre deux plans parallèles.
On appelle face « polygonale », une face dont tous les côtés sont des segments de droites; on appelle face « ronde », une face dont tous les côtés sont des courbes et on appelle face « hybride », une face qui possède au moins un côté droit et un côté courbe.
On appelle « surfaces internes » des unités photovoltaïques, les surfaces de ces unités situées à l'intérieur de la cellule.
On appelle « revêtement photovoltaïque » une ou plusieurs couches de cellules photovoltaïques supportée(s) ou non par une couche de substrat de base.

Avantageusement, le noyau d'interaction est un guide d'onde de forte atténuation longitudinale.

Préférentiellement, le noyau d'interaction est un milieu gazeux et pour chaque unité photovoltaïque, la hauteur h de l'unité est égale à n fois le diamètre du cercle circonscrit contenant sa plus grande base, avec n strictement supérieur à 1.

Encore plus préférentiellement, n est pris supérieur à 3.

De manière avantageuse, la cellule solaire est constituée de six unités photovoltaïques pleines et identiques de sorte que ladite cellule ait une structure hexagonale régulière.

Préférentiellement, les unités photovoltaïques ont une coupe transversale droite en forme de trapèze isocèle dont la petite base est un arc de cercle, de sorte que, lors de l'agencement desdites unités pour former la cellule, la surface interne ait la forme d'un cylindre creux.

Avantageusement, l'unité photovoltaïque est en verre et la surface interne est revêtue, de l'extérieur vers l'intérieur, d'une couche semi-conductrice dopée N ou P, d'une couche semi-conductrice dopée P ou N et d'une couche de base.

Préférentiellement, des contacts électriques sont positionnés sur les surfaces de contacts des unités photovoltaïques, lesdits contacts s'étendent en partie sur la surface arrière des unités et sont séparés par une zone neutre.
On appelle «surfaces de contact» des unités photovoltaïques les faces de leurs prismes par lesquelles les unités sont reliées entre elles.
On appelle « surface arrière » des unités photovoltaïques, la surface à l'extérieur de la cellule.

L'invention concerne également un module photovoltaïque remarquable en ce qu'il comporte: des cellules solaires précédemment décrites solidarisées entre elles par un moyen de liaison et des couches protectrices au-dessus et en dessous de ces cellules.

De manière avantageuse, le moyen de liaison est une colle conductrice et les couches protectrices sont constituées de deux couches de matériaux transparents entre lesquelles s'intercale une couche de matériaux isolants.

Une première variante de réalisation de la cellule solaire est constituée d'une seule unité photovoltaïque, ladite cellule ayant une structure cylindrique creuse.

Préférentiellement, l'unité photovoltaïque aura un faible diamètre.

Avantageusement, l'unité photovoltaïque est en matériau transparent et la surface interne est revêtue, de l'extérieur vers l'intérieur, d'une couche semi-conductrice dopée N ou P, d'une couche semi-conductrice dopée P ou N et d'une couche de semi-conducteur de base.
De manière préférentielle, des contacts électriques sont répartis en fonction de leurs polarités dans des sillons et sur les bases supérieure et inférieure B1 et B2 de l'unité photovoltaïque ou le long de la surface extérieure de l'unité photovoltaïque. De manière avantageuse, l'invention concerne également un module photovoltaïque remarquable en ce qu'il comporte des cellules solaires telles que décrites précédemment agencées dans les compartiments d'une structure compartimentée en matériau transparents, et en ce qu'il comporte dans l'ordre suivant: une couche protectrice, une feuille de circuit imprimé, la structure compartimentée contenant les cellules, une autre feuille de circuit imprimé et une autre couche protectrice.

### BREVE DESCRIPTION DES FIGURES

D'autres avantages et caractéristiques ressortiront mieux de la description qui va suivre, d'un exemple particulier de réalisation, donné à titre d'illustration non limitative, d'une cellule solaire prismatique et d'un module solaire tridimensionnel, conformément à l'invention, en référence aux figures annexées sur lesquelles:
[Fig 1] représente une vue cavalière d'une unité photovoltaïque selon l'invention.
[Fig 2] représente une vue cavalière d'une cellule solaire prismatique selon l'invention.
[Fig 3] représente une vue de dessus d'une cellule solaire prismatique selon l'invention.
[Fig 4] représente une vue de dessus d'un module photovoltaïque selon l'invention.
[Fig 5] représente une vue cavalière d'une première variante d'une cellule photovoltaïque avec des contacts électriques sur la surface extérieure selon l'invention.
[Fig 6] représente une vue cavalière d'une première variante d'une cellule photovoltaïque avec des contacts électriques sur bases supérieure et inférieure B1 et B2 selon l'invention.
[Fig 7] représente une vue de face d'un module photovoltaïque constituées de cellules cylindriques selon l'invention.

### DESCRIPTION DETAILLEE DE L'INVENTION

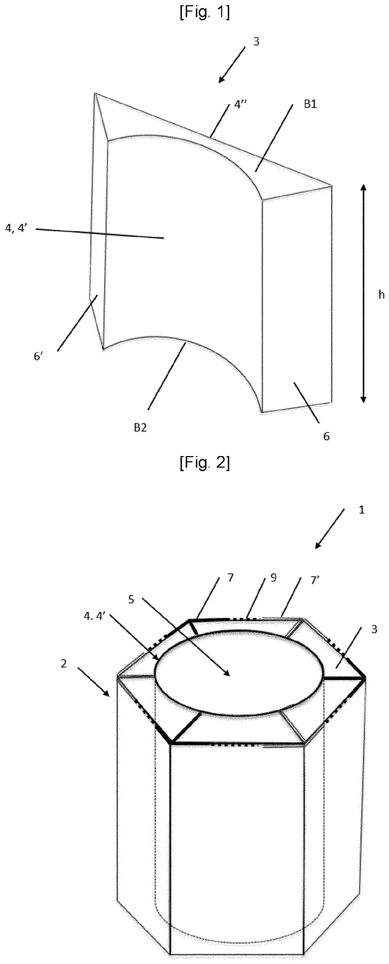

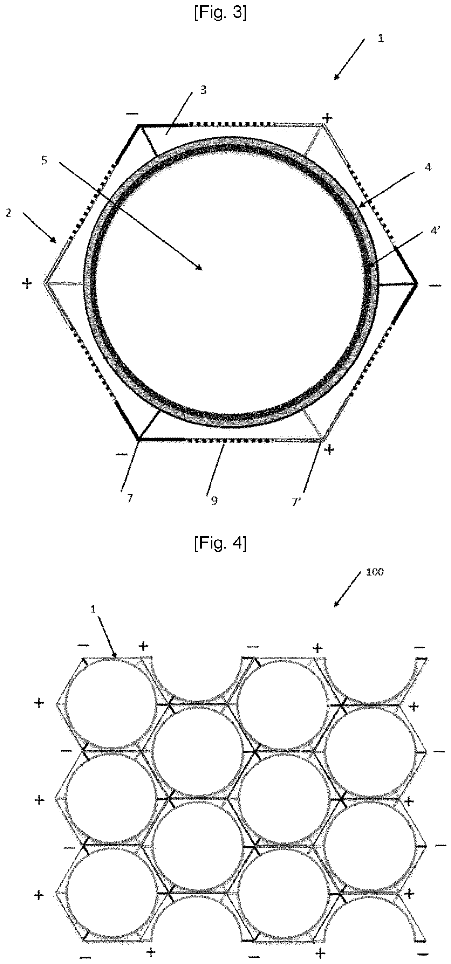

En référence des figures 1 à 4, il est représenté une cellule solaire tridimensionnelle 1, 10 caractérisée en ce qu'elle comporte au moins:
- une paroi photovoltaïque 2 constituée d'au moins une unité photovoltaïque 3 en forme de tronc de solide agencée de sorte à former le mur de la cellule solaire 1, ladite unité 3 étant constituée de deux bases normalement parallèles, une base supérieure B1 et une base inférieure B2 entre lesquelles s'étend une partie de solide pleine ou creuse de hauteur h dont les faces sont polygonales et/ou rondes et/ou hybrides, chaque unité 3 comportant, au moins sur sa surface interne 4, un revêtement photovoltaïque 4';
- un noyau d'interaction 5 permettant aux ondes lumineuses d'entrer en contact avec le revêtement photovoltaïque 4'.

Avantageusement, le noyau d'interaction 5 est un guide d'onde de forte atténuation longitudinale. Plus l'atténuation longitudinale sera forte plus la propagation lumineuse transversale de la lumière dans la fibre sera importante. Ceci permettra de mettre en contact une plus forte quantité d'énergie lumineuse avec les revêtements photovoltaïques 4'. Ce guide d'onde pourra être par exemple, une fibre optique à gradient ou à saut d'indice de forte atténuation longitudinale.

Préférentiellement, le noyau d'interaction 5 est un milieu gazeux et pour chaque unité photovoltaïque 3, la hauteur h de l'unité est égale à n fois le diamètre du cercle circonscrit contenant sa plus grande base, avec n strictement supérieur à 1. Un noyau d'interaction 5 gazeux permet l'allégement de la structure. On choisira de préférence un mélange constitué d'air et d'environ 10% de gaz rare de type Krypton et / ou Argon. L'ajout de ces gaz rares a plusieurs avantages, il permet de protéger les revêtements photovoltaïques 4' de la corrosion et assure une isolation phonique et thermique.

Encore plus préférentiellement, n est pris supérieur à 3. Plus la hauteur h de l'unité photovoltaïque 3 est grande par rapport au diamètre du cercle circonscrit de la plus grande base, plus l'effet guide d'onde est important.

De manière avantageuse, la cellule solaire est constituée de six unités photovoltaïques 3 pleines et identiques de sorte que ladite cellule 1 ait une structure hexagonale régulière. Cependant, cette cellule 1 pourra avoir une forme de prisme à base triangulaire, à base carrée etc... par exemple, même si ces choix ne sont pas optimaux. En effet, cette structure hexagonale permet l'optimisation de l'assemblage des cellules 1 entre elles par la formation d'un module solaire 100 en nid d'abeille mais elle permet également l'optimisation de l'effet guide d'onde. Les structures prismatiques à 3 ou 4 côtés par exemple, ont une efficacité très inférieure en terme de guidage d'onde. Ceci s'explique par le fait que dans ces structures la surface interne 4 ne peut pas avoir une forme de cylindre creux.
Cette disposition particulière permet également au module solaire 100 d'adapter sa morphologie à la surface sur laquelle il est installé.

Préférentiellement, les unités photovoltaïques 3 ont une coupe transversale droite en forme de trapèze isocèle dont la petite base est un arc de cercle, de sorte que, lors de l'agencement desdites unités 3 pour former la cellule 1, la surface interne 4 ait la forme d'un cylindre creux.
Cette morphologie particulière des unités photovoltaïques 3 permet un assemblage facile de la cellule 1 quel que soit la structure choisie: cellule 1 en forme de prisme à base triangulaire, à base carrée... la morphologie de la surface interne 4 permet quant à elle d'optimiser la distribution des rayons solaires en exploitant la réflectivité des revêtements photovoltaïques 4'. En effet, lorsqu'un rayon solaire arrive sur la surface interne 4 de la cellule 1, une partie des photons est absorbée pour être transformée en énergie électrique et une autre partie est réfléchie du fait de la réflectivité élevée des revêtements photovoltaïques 4' en général. Cette structure particulière permet à la partie réfléchie des photons d'être renvoyée à nouveau sur le revêtement photovoltaïque 4' en vue de sa conversion en énergie électrique. Ainsi les photons sont distribués sur toute la surface interne 4 de la cellule 1, démultipliant la surface d'acquisition.

Avantageusement, l'unité photovoltaïque 3 est en verre et la surface interne 4 est revêtue, de l'extérieur vers l'intérieur, d'une couche semi-conductrice dopée N ou P, d'une couche semi-conductrice dopée P ou N et d'une couche base. Le verre est ici utilisé comme substrat des revêtements photovoltaïques 4'. Plus généralement, on choisira tout matériau capable de supporter les conditions requises par les procédés de dépôt de ces revêtements 4'. Certains de ces procédés par exemple requièrent de hautes températures, le matériau choisi devra donc permettre de résister à ces températures.
En ce qui concerne les semi-conducteurs, ils pourront être choisis indifféremment dans les groupes II-VI et III-V. La couche de base, quant à elle, sera une couche de semi-conducteur non dopée.

Préférentiellement, des contacts électriques 7, 7' sont positionnés sur les surfaces de contacts 6, 6' des unités photovoltaïques 3, lesdits contacts 7, 7' s'étendent en partie sur la surface arrière 4" des unités 3 et sont séparés par une zone neutre 9.

L'invention concerne également un module photovoltaïque 100 remarquable en ce qu'il comporte: des cellules solaires 1 telles que décrites précédemment solidarisées entre elles par un moyen de liaison et des couches protectrices 8, 8' au-dessus et en-dessous de ces cellules 1. Les cellules solaires 1 peuvent être entières ou semi-entières de sorte à permettre audit module 100 d'avoir des côtés sensiblement droits.

De manière avantageuse, le moyen de liaison est une colle conductrice et les couches protectrices sont constituées de deux couches de matériau transparent entre lesquelles s'intercale une couche de matériau isolant. On utilisera une colle époxy dopée à l'argent et on pourra pour faciliter l'application en quantité suffisante de cette colle rendre concaves les surfaces de contacts. L'avantage d'appliquer une couche épaisse de colle entre les unités photovoltaïques est que cette colle constituera une zone élastique permettant ainsi l'absorption des chocs mécaniques et des vibrations. Pour alléger la structure du module, les couches de verres constituant la couche protectrice du module auront une faible épaisseur de l'ordre de 5 à 6 mm.

### Description d'autres modes de réalisation

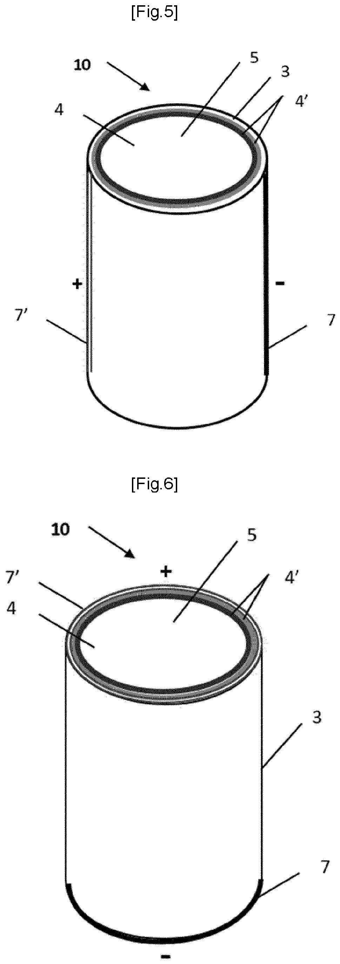

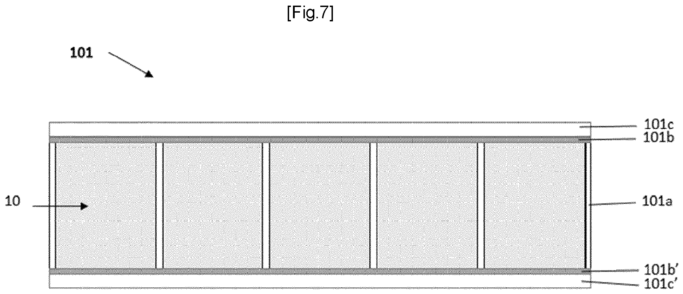

En référence aux figures 5 à 7, une première variante de réalisation de la cellule solaire 1 est constituée d'une seule unité photovoltaïque 3, ladite cellule 1 ayant une structure cylindrique creuse. Cette unité photovoltaïque 3 tubulaire sera de flexible et de faible épaisseur. On choisira une épaisseur comprise entre 40 et 250 microns.

Préférentiellement, l'unité photovoltaïque 3 aura un faible diamètre.

Avantageusement, l'unité photovoltaïque 3 est en matériau transparent et la surface interne 4 est revêtue, de l'extérieur vers l'intérieur, d'une couche semi-conductrice dopée N ou P, d'une couche semi-conductrice dopée P ou N et d'une couche de semi-conducteur de base. De préférence, on choisira un matériau permettant d'avoir une unité photovoltaïque flexible. On choisira un revêtement photovoltaïque en Silicium ou en Tellure de Cadmium.

De manière préférentielle, des contacts électriques 7, 7' sont répartis en fonction de leurs polarités dans des sillons et sur les bases supérieure et inférieure B1 et B2 de l'unité photovoltaïque 3 ou le long de la surface extérieure de l'unité photovoltaïque 3. Ces contacts 7, 7' étant positif du côté de la base B1 et négatif du côté de la base B2 ou inversement et positif ou négatif à une extrémité ou à l'autre de la surface extérieure.

De manière avantageuse, l'invention concerne également un module photovoltaïque 101 remarquable en ce qu'il comporte des cellules solaires 10 telles que décrites précédemment agencées dans les compartiments d'une structure 101a compartimentée en matériau transparents, et en ce qu'il comporte dans l'ordre suivant : une couche protectrice 101c, une feuille de circuit imprimé 101b, la structure compartimentée 101a contenant les cellules 10, une autre feuille de circuit imprimé 101b' et une autre couche protectrice 101c'. On choisira une structure 101a avec des compartiments alvéolaires. Les feuilles de circuits imprimé 101b, 101b' seront conçues de sorte à ce que leurs pistes se trouvent le long des murs des cellules 10 et en ce que des ouvertures se trouvent au-dessus des noyaux 5 d'interaction de sorte à ne pas empêcher la propagation des ondes lumineuses dans ces noyaux 5. Possibilité d'application industrielle
La cellule solaire photovoltaïque et le module photovoltaïque selon l'invention, trouvent leurs applications particulières dans le domaine de la production d'énergie. Enfin, il va de soi que les exemples de cellules solaires photovoltaïques et de modules photovoltaïques conformes à l'invention qui viennent d'être décrits ne sont que des illustrations particulières, en aucun cas limitatives de l'invention.

## Revendications

1. Cellule solaire tridimensionnelle (1, 10) **caractérisée en ce qu'**elle comporte au moins:
- une paroi photovoltaïque (2) constituée d'au moins une unité photovoltaïque (3) en forme de tronc de solide agencée de sorte à former le mur de la cellule solaire (1), ladite unité (3) étant constituée de deux bases normalement parallèles, une base supérieure B1 et une base inférieure B2 entre lesquelles s'étend une partie de solide pleine ou creuse de hauteur h, dont les faces sont polygonales et/ou rondes et/ou hybrides, chaque unité (3) comportant, au moins sur sa surface interne (4), un revêtement photovoltaïque (4'),
- un noyau d'interaction (5) permettant aux ondes lumineuses d'entrer en contact avec le revêtement photovoltaïque (4').

2. Cellule solaire (1, 10) selon la revendication précédente **caractérisée en ce que** le noyau d'interaction (5) est un guide d'onde de forte atténuation longitudinale.

3. Cellule solaire (1, 10) selon la revendication 1 **caractérisée en ce que** le noyau d'interaction (5) est un milieu gazeux et **en ce que** pour chaque unité photovoltaïque (3), la hauteur h de ladite unité est égale à n fois le diamètre du cercle circonscrit contenant sa plus grande base, avec n strictement supérieur à 1.

4. Cellule solaire (1, 10) selon la revendication précédente **caractérisée en ce que** n est pris supérieur à 3.

5. Cellule solaire (1) selon l'une quelconque des revendications précédentes **caractérisée en ce qu'**elle est constituée de six unités photovoltaïques (3) pleines et identiques de sorte que ladite cellule (1) ait une structure hexagonale régulière.

6. Cellule solaire (1) selon l'une quelconque des revendications précédentes **caractérisée en ce que** les unités photovoltaïques (3) ont une coupe transversale droite en forme de trapèze isocèle dont la petite base est un arc de cercle, de sorte que, lors de l'agencement desdites unités (3) pour former la cellule (1), la surface interne (4) ait la forme d'un cylindre creux.

7. Cellule solaire (1) selon l'une quelconque des revendications précédentes **caractérisée en ce que** ladite unité photovoltaïque (3) est en verre et **en ce que** la surface interne (4) est revêtue, de l'extérieur vers l'intérieur, d'une couche semi-conductrice dopée N ou P, d'une couche semi-conductrice dopée P ou N et d'une couche de semi-conducteur de base.

8. Cellule solaire (1) selon l'une quelconque des revendications précédentes **caractérisée** en ce des contacts électriques (7, 7') sont positionnés sur les surfaces de contacts (6, 6') des unités photovoltaïques 3, lesdits contacts (7, 7') s'étendent en partie sur la surface arrière (4") des unités (3) et sont séparés par une zone neutre (9).

9. Module photovoltaïque (100) **caractérisé en ce qu'**il comporte: des cellules solaires (1) selon les revendications 1 à 8 solidarisées entre elles par un moyen de liaison et des couches protectrices (8, 8') au-dessus et en-dessous de ces cellules(1).

10. Module photovoltaïque (100) selon la revendication précédente **caractérisé en ce que** le moyen de liaison est une colle conductrice et **en ce que** les couches protectrices (8, 8') sont constituées de deux couches de verre entre lesquelles s'intercale une couche de silicone isolant.

11. Cellule solaire (10) selon la revendication 4, **caractérisée en ce qu'**elle est constituée d'une seule unité photovoltaïque (3) et **en ce que** ladite cellule (10) a une structure cylindrique creuse.

12. Cellule solaire (10) selon la revendication précédente, **caractérisée en ce que** l'unité photovoltaïque (3) aura un faible diamètre.

13. Cellule solaire (10) selon la revendication précédente, **caractérisée en ce que** l'unité photovoltaïque (3) est en matériau transparent et **en ce que** la surface interne (4) est revêtue, de l'extérieur vers l'intérieur, d'une couche semi-conductrice dopée N ou P, d'une couche semi-conductrice dopée P ou N et d'une couche de semi-conducteur de base.

14. Cellule solaire (10) selon la revendication précédente, **caractérisée en ce que** des contacts électriques (7, 7') sont répartis en fonction de leurs polarités dans des sillons positionnés sur les bases supérieure et inférieure B1 et B2 de l'unité photovoltaïque (3) ou le long de la surface extérieur de l'unité photovoltaïque (3).

15. Module photovoltaïque (101) **caractérisé en ce qu'**il comporte: des cellules solaires (10) selon les revendications 11 à13 agencées dans les compartiments d'une structure (101a) compartimentée en matériau transparents, et **en ce qu'**il comporte dans l'ordre suivant: une couche protectrice (101c), une feuille de circuit imprimé (101b), la structure compartimentée (101a) contenant les cellules (10), une autre feuille de circuit imprimé (101b') et une autre couche protectrice (101c).
